# EUROPEAN PATENT SPECIFICATION

(11) **EP 3 784 551 B1**
(45) Date of publication and mention of the grant of the patent: **21.12.2022**
(21) Application number: 19701224.8
(22) Date of filing: 21.01.2019
(51) Int. Cl.: B62D 25/16

(54) **DEVICE FOR THE TEMPORARY INTERCONNECTION OF ACCESSORIES TO A TRUCK OR AN ARTICULATED RIG COMPOSED OF TRACTOR AND TRAILER OR SEMI TRAILER**
VORRICHTUNG ZUM ZEITWEILIGEN VERBINDEN VON ZUBEHÖRTEILEN MIT EINEM LASTKRAFTWAGEN ODER EINEM AUS ZUGFAHRZEUG UND ANHÄNGER ODER AUFLIEGER BESTEHENDEN GELENKBOCK
DISPOSITIF D'INTERCONNEXION TEMPORAIRE D'ACCESSOIRES SUR UN CAMION OU UNE PLATEFORME ARTICULÉE COMPOSÉE D'UN TRACTEUR ET D'UNE REMORQUE OU D'UNE SEMI-REMORQUE

(30) Priority: 24.04.2018 IT 201800004805
(43) Date of publication of application: 03.03.2021
(73) Proprietor: Lago Accessori S.r.l., 35014 Fontaniva (PD) (IT)
(72) Inventor: LAGO, Fabio, 35013 Cittadella (IT)
(74) Representative: Modiano, Micaela Nadia
(86) International application number: PCT/EP2019/051382
(87) International publication number: WO 2019/206469

(56) References cited:
- EP-A1- 0 694 466
- EP-A1- 2 666 702
- FR-A1- 2 866 622
- US-A1- 2015 097 365
- US-B1- 7 407 194

## Description

The present invention relates to a device for the temporary interconnection of accessories to a truck or an articulated rig composed of tractor and trailer or semi trailer.

The expression "trailer truck" is currently understood to designate a vehicle constituted by a tractor unit (or motor vehicle or truck) and by one or more towed units (or trailer), the latter being without an engine.

An articulated rig is similar to a truck and differs from it in that it is composed of a road tractor, therefore a vehicle provided with a cab but not with a loading compartment, where instead of the latter there is a fifth wheel on which part of the semitrailer rests (and is fixed).

In the field of the construction of trailers and semitrailers for road transport, in the operations for outfitting them one resorts to the addition of outfitting accessories, some of which are required by standards and others for mere customization, such as for example fenders, side guards, tool carrier boxes, tanks for hand washing water.

In the background art, every outfitting accessory has its own specific supporting means, generally dictated by the shape of the accessory itself and by the structural/geometric requirements of the assembly.

The variety of the solutions is increased when one resorts to fixing the accessory to the platform, when it is used as an alternative to the chassis.

Examples of interconnection for example of a fender are shown in FR2440306A1, DE8417557U1, US 7 407 194 , and DE8708265U1.

Other accessories, such as for example tanks, boxes or containers, are usually supported by adapted brackets, which are usually screwed or welded to them and in turn associated with a part of the chassis of a component of the trailer truck or articulated rig.

These couplings sometimes have a fixed position, as in the case of brackets/supports obtained from profiles made of metal plate, and sometimes are adjustable along one or two planes, as often occurs with tubular supports and systems dedicated to them (fenders), and almost always rely on conventional fixing devices such as screws, bolts/nuts used independently or in combination with clamps or bushings which are fastened by means of nuts and/or bolts.

The disadvantages that can be ascribed to the background art affect at different levels the construction and use for example of the trailer, such as the need to use specific supports for each accessory, which makes it necessary to perform specific mechanical interventions on the chassis, such as holes, welds and bolting, which in addition to being onerous require an anchoring that must be very strong, in order to prevent vibrations from entailing for example a loosening of the anchorings.

This limits or prevents in some cases changing the position of the accessory after its installation.

Furthermore, the mechanical means used to obtain a local fixing of the supports to the chassis, such as rivets, bolts, nuts, often prove themselves unreliable due to corrosion, which is typical of the salty environment in which the vehicles often find themselves operating.

Furthermore, any replacement of outfitting accessories, due to the lack of adjustability of the chassis supports traditionally used, constrains the user to choose only accessories that are identical to the originals, since they must be associated with very specific and contoured supports, and furthermore prevents any further subsequent customization of the trailer dictated by different use contexts or by an evolution of said contexts.

On the part of the outfitter/manufacturer of the trailer, the fixing or replacement of the various accessories are operations that are onerous from the point of view of time and number and variety of operations, giving rise to higher nonconformity indices which are typical of nonstandardized contexts.

Since each type of accessory has different shapes and is subjected to multiple forces and stressed in normal operating conditions, it requires a specific type of mechanical connection, and this changes among similar accessories of different brands/manufacturers; this variety of solutions can turn out to be penalizing in a highly industrialized assembly or replacement environments, in which repeatability leads to efficiency and variety leads to inefficiency.

The adjustability of the position of the accessory in its final configuration, furthermore, is often difficult to perform once the supports have been mounted, especially in terms of height, since the height at which for example the brackets are mounted is decisive and cannot be changed once they have been fixed.

The aim of the present invention is therefore to solve the described technical problems, eliminating the drawbacks of the cited background art, by providing a device that makes it possible to interconnect stably accessories, such as by way of nonlimiting example fenders, side guards, tool carrying boxes, hand washing water tanks, to a trailer truck or articulated rig with rapidity, precision and repeatability of the interconnection.

Within this aim, an object of the present invention is to provide a device that allows, after interconnection of an accessory to a trailer truck or articulated rig, the quick and easy removal of said accessory.

A further object is to provide a device that has high adaptability to the dimensional variables that can be detected in the accessories most commonly used in trailer structures of various kinds.

Another object is to provide a device that is free from the use of metallic parts in order to reduce unreliability arising from corrosion.

Another object is to provide a device that allows to achieve a standardization in the components both in the industrial aspect of the outfitting and in the after-sales spare part phase, and which is structurally simple and has low manufacturing costs.

This aim and these and other objects which will become better apparent hereinafter are achieved by a device for the temporary interconnection of accessories to a truck or an articulated rig composed of tractor and trailer or semi trailer, comprising a box-like body or support provided in an upward region with first means for anchoring and locking to a bracket which constitutes the chassis of said truck or articulated rig composed of tractor and trailer or semi trailer, characterized in that said box-like body or support is provided laterally and frontally with first means for temporary interconnection to complementarily shaped second engagement means which are provided in said accessories and frontally with third means for temporary or stable interconnection to said accessories.

Further characteristics and advantages of the invention will become better apparent from the detailed description of a particular but not exclusive embodiment, illustrated by way of nonlimiting example in the accompanying drawings, wherein:

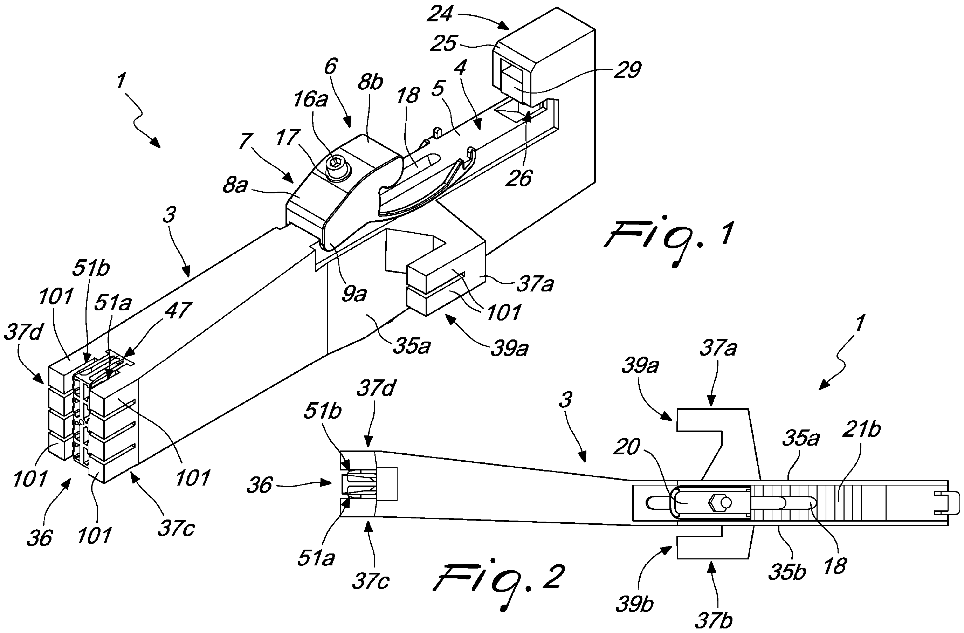

Figure 1 is a first lateral perspective view of the device according to the invention;
Figure 2 is a bottom perspective view of the device according to the invention;

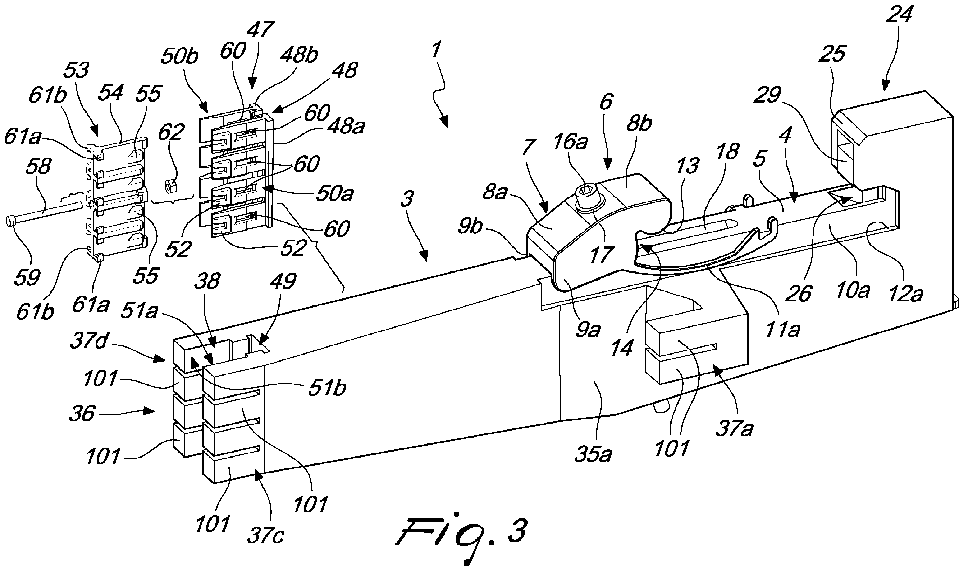

Figure 3 is a second lateral perspective view and an exploded view of the components of the device;
Figure 4 is a front perspective view of the device in the inactive position;
Figure 5 is a partially sectional view of a detail of Figure 4, in the step of initial connection to an accessory;
Figure 6 is a view, similar to the preceding one, of the device in the position for locking the accessory associated therewith;
Figures 7a and 7b are views, similar to the preceding one, of the device in the position for releasing the accessory associated therewith;

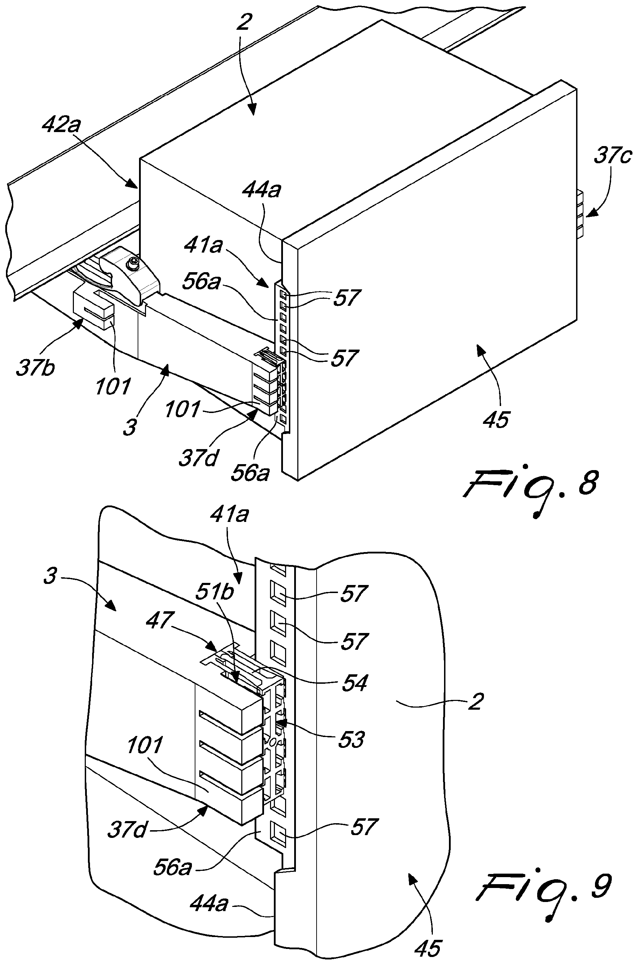

Figure 8 is a front perspective view of the device applied to a box;
Figure 9 is a view of a detail of Figure 8;
Figure 10 is a rear perspective view of the device with which a box has been associated;
Figure 11 is a view of a detail of Figure 10;

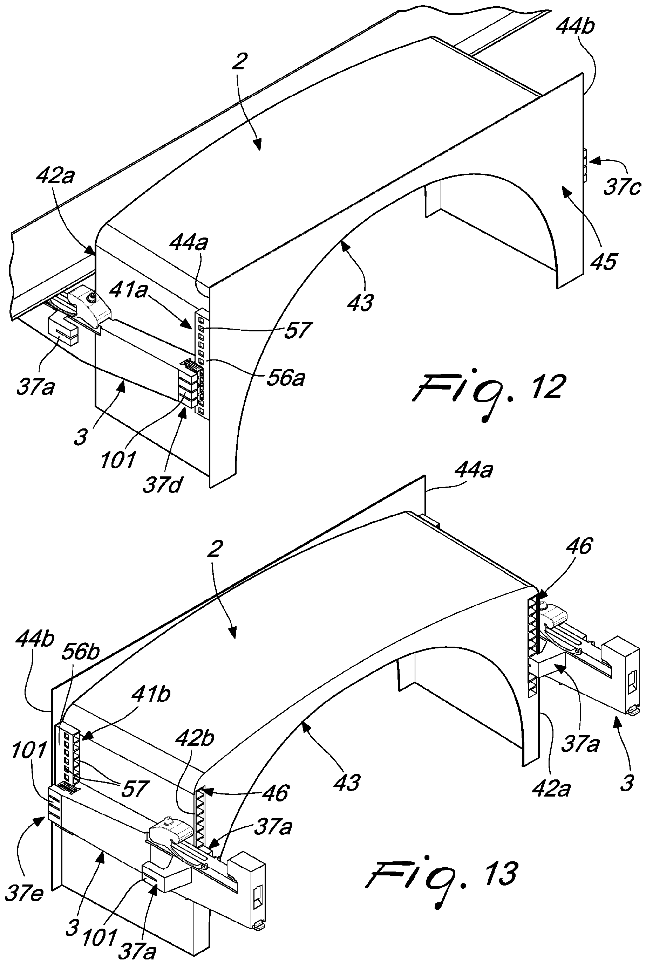

Figures 12 and 13 are front and rear perspective views of the device with which a fender has been associated;
Figures 14 and 15 are front and top views of the device, with which two laterally adjacent boxes have been associated;

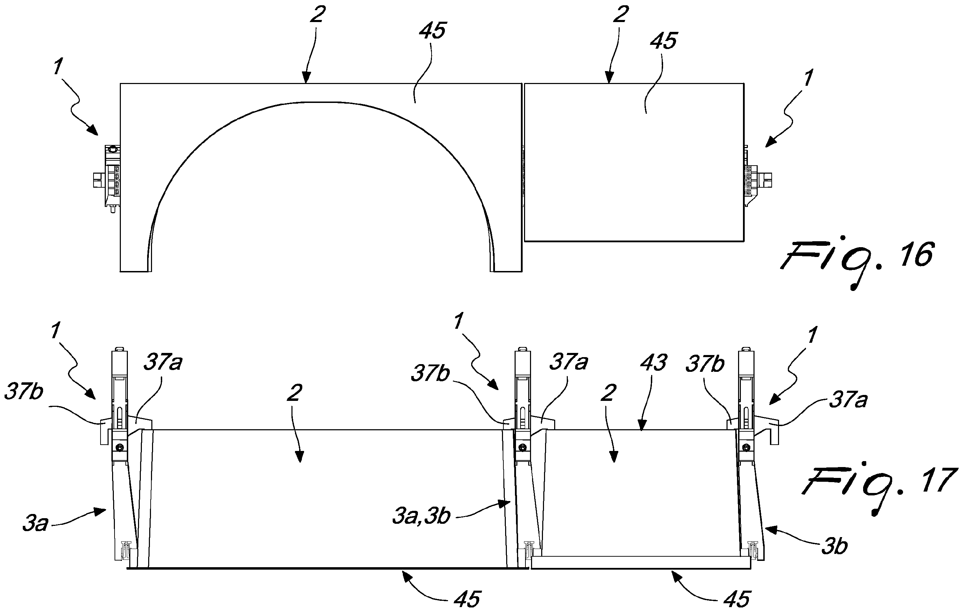

Figures 16 and 17 are front and top views of the device, with which a fender and a box have been associated;

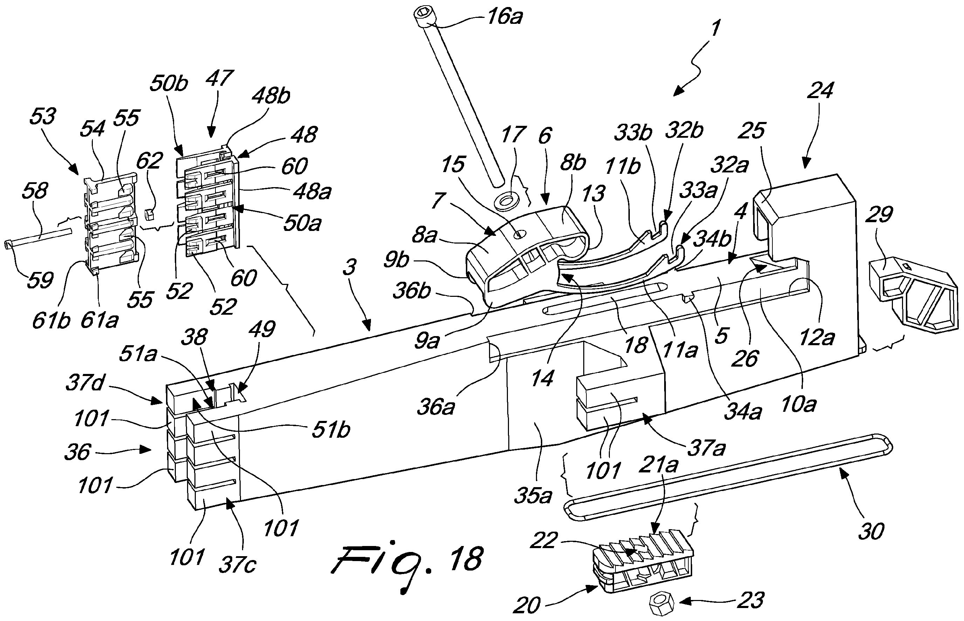

Figure 18 is an exploded view of the device;

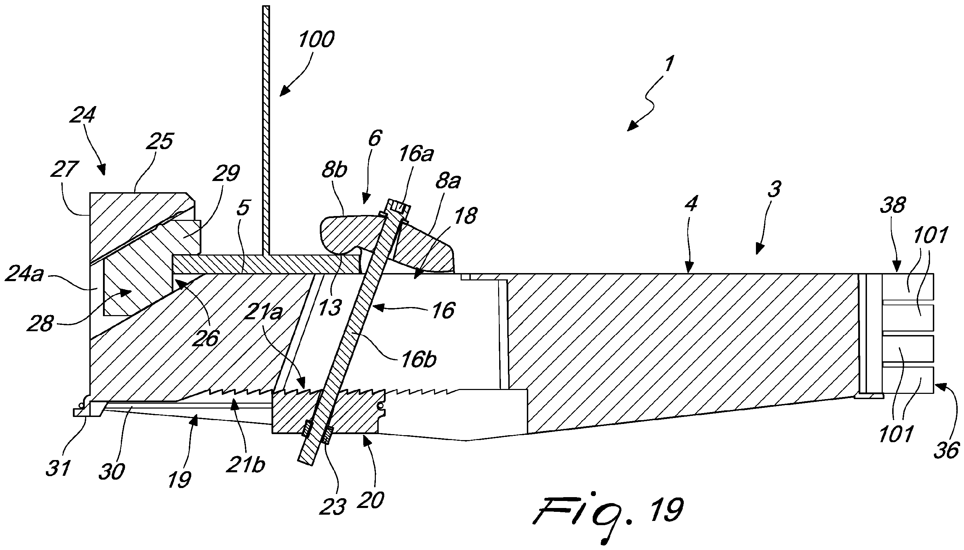

Figure 19 is a sectional view of the device.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a device for the temporary interconnection of accessories, such as for example fenders, tool carrying boxes, side guards, hand washing water tanks, designated by the reference numeral 2, to a trailer truck or an articulated rig.

In the particular embodiment shown, this temporary interconnection occurs directly at the chassis of said truck or articulated rig, in particular at a bracket 100, which constitutes the chassis, for example of the inverted T-shaped type.

The box-like body or support 3, which is preferably made of plastic, is essentially shaped like a parallelepiped so as to form in an upper region a rail 4 which has a planar upper surface 5 which has, in plan view, a substantially rectangular shape, for the resting for example of the head of the bracket 100.

A first slider 6, which can be arranged slidingly at the rail 4, is associated with the box-like body 3.

The first slider 6 is constituted by a U-shaped element which is essentially C-shaped in a transverse cross-section, so as to form an L-shaped base 7, a first wing 8a of which is arranged, during use, on a plane that is inclined with respect to the plane of arrangement of the planar upper surface 5 and the second wing 8b of which is arranged, during use, on a plane that is substantially parallel to the plane of arrangement of the planar upper surface 5.

Two shoulders 9a, 9b protrude from the base 7 and can be arranged slidingly adjacent to the lateral surfaces 10a, 10b of the rail 4.

The first slider 6 is kept, when inactive, slightly raised with respect to the planar upper surface 5 by virtue of the presence of a pair of arms 11a, 11b, which are elastically deformable, have a slightly arc-like shape and protrude from the ends of each shoulder 9a, 9b that is directed toward the second wing 8b.

The arms 11a, 11b rest at adapted steps 12a, 12b provided at the terminal ends of the lateral surfaces 10a, 10b of the rail 4.

The terminal end 13 of the second wing 8b that is directed during use toward the planar upper surface 5 has an advantageously arc-like shape, forming, between the latter and the underlying pair of arms 11a, 11b, a first seat 14 for one of the ends of the head of the bracket.

A first hole 15 is provided at the first wing 8a and is inclined with respect to the plane of arrangement of the second wing 8b, and the head 16a and the stem 16b of a screw 16 can be arranged at the hole with the interposition of an adapted washer 17.

At the upper surface 5 there is, along part of the length of said rail 4 and along the height of the box-like body 3, a second seat 18, which has an inclination that is substantially equal to the inclination of the first hole 15 and communicates with an underlying third seat 19 provided inside the box-like body 3.

The third seat 19 has a greater extension than the second seat 18 and accommodates slidingly inside it a second slider 20, which is essentially shaped like a parallelepiped and has a toothed upper surface 21a, a second hole 22 being provided on the latter and being arranged substantially in axial alignment with the first hole 15, at which it is possible to arrange the stem 16b of the screw 16 and with which an adapted nut 23 is associated without allowing rotation thereof.

The toothed upper surface 21a interacts in a ratchet-like manner with a complementarily toothed lower surface 21b provided at the top region of the third seat 19.

The inclination of the toothed upper surface 21a and of the complementarily toothed lower surface 21b are such as to selectively lock the position of the second slider 20, once the screw 16 has been fastened to the nut 23, in a chosen position within the third seat 19.

A substantially L-shaped tab 24 protrudes at the end of the box-like body 3 that is adjacent to the second wing 8b of the first slider 6, at right angles to the upper surface 5, and a third wing 25 thereof is directed toward the first slider 6.

The sliding of the second slider 20 is freely allowed in the direction of its approach to the tab 24.

The size and position of the third wing 25 are such as to define a fourth seat 26 for the other one of the ends of the head of the bracket 100.

In order to allow adaptation to the particular shape and thickness of the head of the bracket 100, it is possible to arrange slidingly at the fourth wing 27 of the tab 24, within an adapted first cavity 24a provided along an appropriate inclined plane, a block 28 provided with a first tooth 29 which during use protrudes beyond the third wing 25.

The size of the first tooth 29 is such as to allow the correct positioning of an end of the head of the bracket 100 during the step for anchoring the box-like body 3.

The sliding of the slider 20 within the third seat 19 is forced in the direction of the tab 24 by an adapted elastically deformable element 30, such as an elastic band, which is interposed between an engagement tooth 31, which protrudes below the lower surface 21b in a region below the tab 24, and the slider 20.

During the step for positioning the head of the bracket 100 on the box-like body 3, the size of the first tooth 29 is such as to allow the correct positioning of one end of the head of the bracket 100 during the step for anchoring the box-like body 3.

Keeping the first slider 6 sufficiently spaced from the tab 24, the box-like body 3 is rotated until the head of the bracket 100 is adjacent to the planar upper surface 5 and then the first slider 6 is moved, arranging the terminal end 13 of the second wing 8b above the head.

By doing so, the anchoring of the box-like body 3 to the bracket 100 is achieved, its locking being achieved by tightening the screw 16 until the second slider 20 is fastened onto the lower surface 21b provided at the top region of the third seat 19.

In order to facilitate the positioning of the bracket 100 on the rail 4, on the terminal ends 32a, 32b of the arms 11a, 11b there is a recess 33a, 33b which is adapted to engage temporarily adapted teeth 34a, 34b which protrude transversely and externally to said planar upper surface 4a at a due distance from said tab 24.

Advantageously, in this condition the first slider 6 reaches the end of its stroke, striking an adapted abutment 36a, 36b that is present at the ends of said lateral surfaces 10a, 10b that lie opposite the tab 24.

In order to achieve the anchoring of the box-like body 3 to the bracket 100 that constitutes the chassis, the elastic deformation that can be imparted to the arms 11a, 11b allows the uncoupling of the teeth 34a, 34b from the recesses 33a, 33b and the elastically deformable element 30 facilitates the movement of the second slider 20, of the first slider 6, of the screw 16 and of the nut 23.

The box-like body or support 3 furthermore has, on the lateral surfaces 35a, 35b and on the front surface 36, which lies opposite the tab 24, first means for temporary interconnection to complementarily shaped second engagement means which are present in said accessories, said first means comprising a pair of first protrusions 37a, 37b and a pair of second protrusions 37c, 37d, which are substantially mutually parallel and between which there is a first axial seat 38 provided at right angles to said rail and slightly axially offset with respect to the axis of said rail 4.

Advantageously, each pair of first protrusions 37a, 37b and second protrusions 37c, 37d is comb-shaped, so as to form individual second teeth 101.

Each element of the pair of first protrusions 37a, 37b is L-shaped and its fifth free wing 39a, 39b is directed oppositely with respect to said tab 24.

The first protrusions 37a, 37b and the second protrusions 37c, 37d cooperate with complementarily shaped second engagement means provided in said accessories 2, which are constituted by a pair of slots 40a, 40b and by a pair of protrusions 41a, 41b.

The pair of slots 40a, 40b is provided proximate to or at the rear lateral edges 42a, 42b of the rear wall 43 of the accessory 2 and affects part of the height of the rear lateral edges 42a, 42b along part of the depth of the rear wall 43.

The pair of protrusions 41a, 41b protrudes to the rear of the lateral edges 44a, 44b of the front wall 45 of the accessory 2, affects part of the height of the lateral edges 44a, 44b and is extended along part of the depth of the front wall 45.

The width of the rear wall 43 is narrower than that of the front wall 45.

The pair of slots 40a, 40b and the pair of protrusions 41a, 41b each have an axial seat 46 for the access and positioning of the complementarily shaped pairs of first protrusions 37a, 37b and second protrusions 37c, 37d.

The axial seats 46 are arranged vertically with respect to the accessory, so as to allow a chosen height position thereof with respect to the chassis of the trailer truck or articulated rig.

Advantageously, the first protrusions 37a have different dimensions with respect to those of the second protrusions 37b, the former protruding further outward from the lateral surface 35a.

The axial offset of the first axial seat 38 is in the direction of the first protrusions 37a and the extent of the axial offset is such as to compensate for the greater protrusion of the first protrusions 37a from the lateral surface 35a.

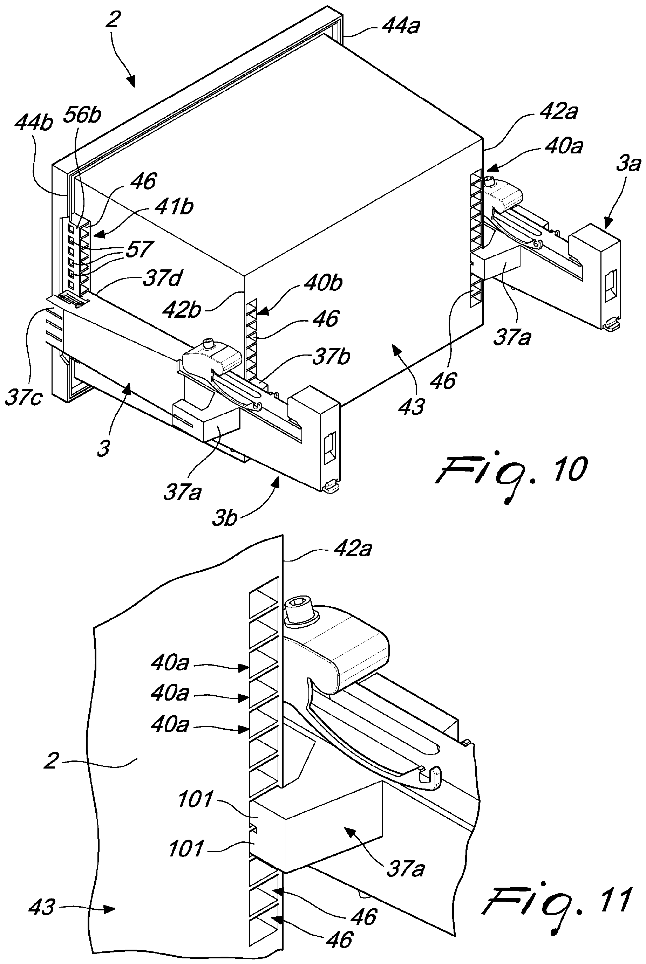

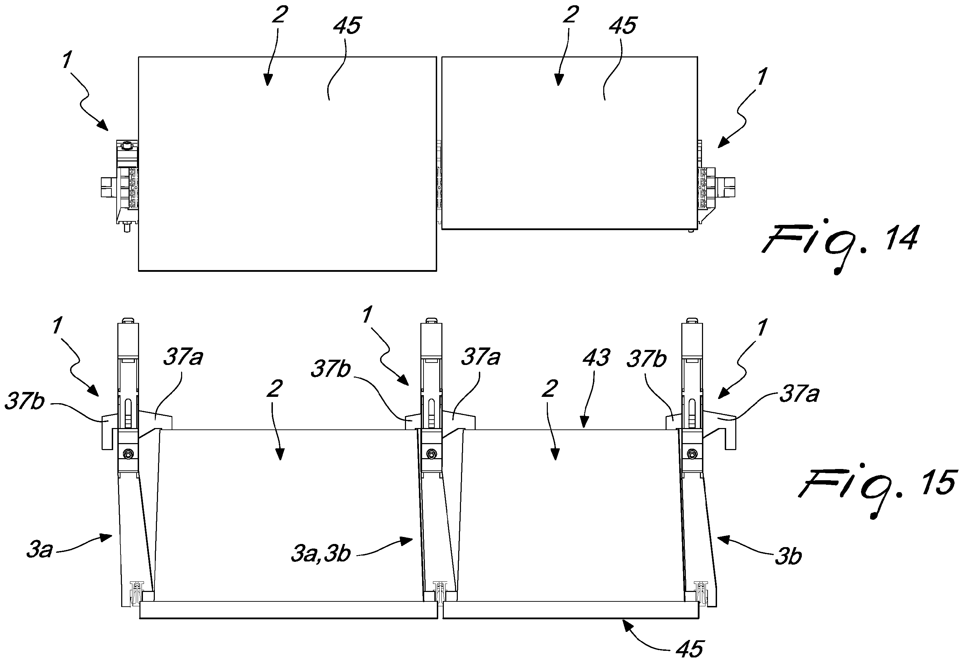

Accordingly, when it is necessary to couple an accessory 2 between two of the box-like bodies 3, which for the sake of convenience in interpretation are designated by the numerals 3a, 3b, as shown for example in Figures 10 and 14 a first protrusion 37a of the box-like body 3a is to be inserted in a chosen axial seat 46 of the first slot 40a and the second protrusion 37c, again of the box-like body 3a, is to be inserted in an axial seat 46 of the second slot 41a.

Likewise, a first protrusion 37b of the box-like body 3b is to be inserted in a corresponding axial seat 46 of the first slot 40a and the second protrusion 37d, again of the box-like body 3b, is to be inserted in an axial seat 46 of the second slot 41b.

It is thus possible to pair an accessory at one or both sides of a box-like body 3a or 3b.

Frontally with respect to the box-like body 3 there are third means for temporary or stable interconnection to the accessories, the third means comprising a block 47 which is substantially U-shaped so as to form a base 48, substantially equal in height to said box-like body 3, which is T-shaped and is provided with a pair of sixth wings 48a, 48b which can be inserted within a complementarily shaped second cavity 49 provided at one end of the first seat 38 that is directed oppositely with respect to the front surface 36.

The block 47 is thus not allowed an axial movement with respect to the box-like body 3.

Multiple sixth wings 50a, 50b protrude from the base 48, are elastically deformable and, when inactive, tend to be arranged substantially parallel to each other.

Once the block 47 has been arranged within the first seat 38, the sixth wings 50a, 50b are arranged laterally adjacent to corresponding recesses 51a, 15b provided on the mutually facing surfaces of each one of the teeth 101 of the pair of second protrusions 37c, 37d.

Each one of the sixth wings 50a, 50b, which are elastically deformable, has, at the free end directed toward the front surface 36, third teeth 52 which have a triangular shape, with the vertex directed toward the front surface 36.

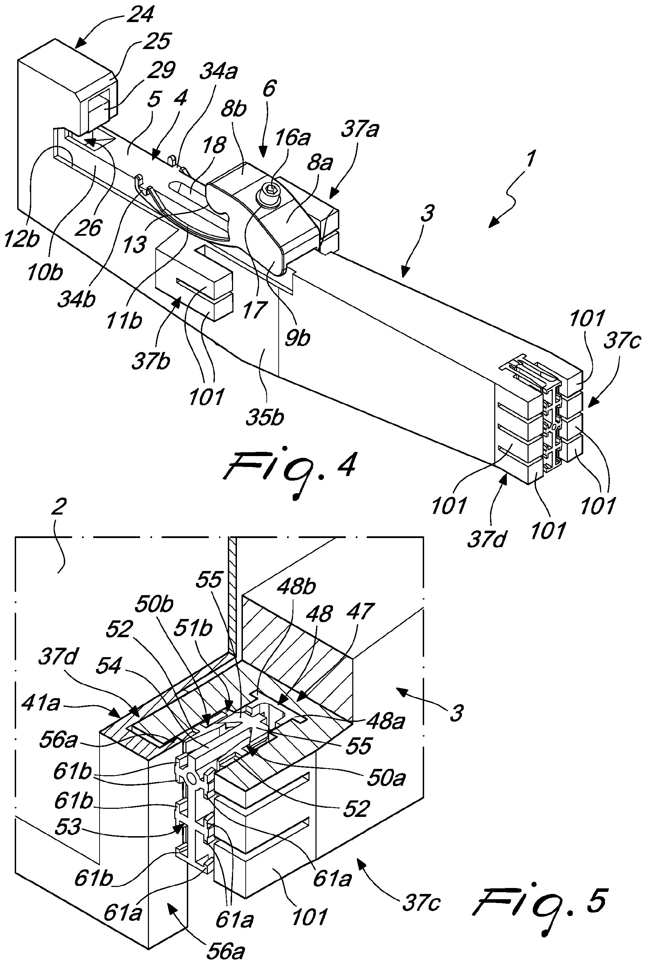

A T-shaped wedge 53 cooperates to constitute the third means for temporary or stable interconnection to the accessories 2, and its stem 54 can be inserted between the sixth wings 50a, 50b, as shown in Figure 5.

Multiple lugs 55 protrude outward laterally to the stem 54, proximate to its free end, and their function is to interact with the sixth wings 50a, 50b.

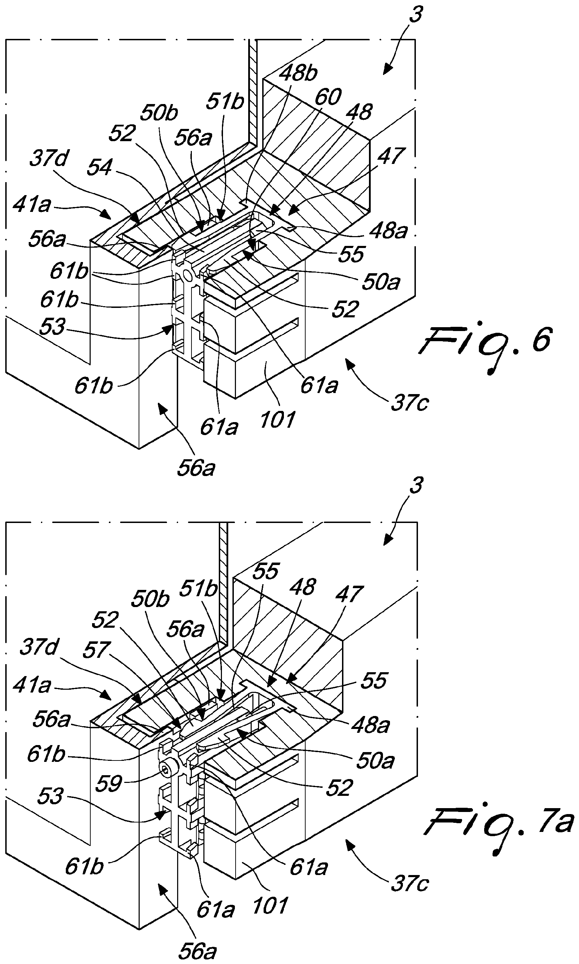

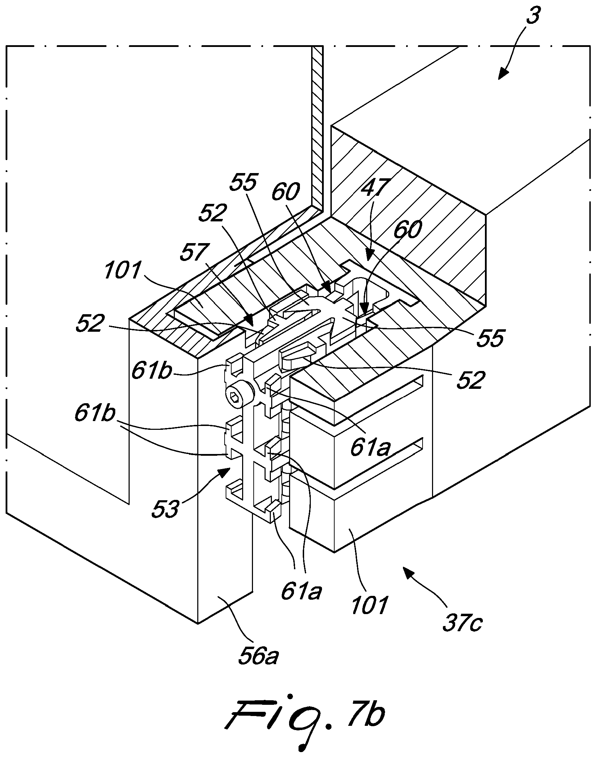

Grooves 60, provided axially to each one of the sixth wings 50a, 50b, also cooperate to constitute the third means for temporary or stable interconnection to the accessories 2; the lugs 55 are arranged within the grooves 60 during the step for release of the accessory 2, shown in Figures 7a and 7b.

The presence and shape of the recesses 51a, 51b is such as to allow the insertion thereat of the outer lateral edge 56a, 56b of the pair of protrusions 41a, 41b in the portion in which the axial seats 46 are provided.

Openings 57 are provided on the lateral surfaces of the outer lateral edges 56a, 56b that act on the recesses 51a, 51b and are adapted to accommodate temporarily the third teeth 52.

After positioning the block 47 and the wedge 53 in the seat 38 and the pair of second protrusions 37c, 37d in the axial seats 46, forcing the wedges 53 within the blocks 47 (see Figure 6), the sixth wings 50a, 50b divaricate so that the third teeth 52 are arranged in the openings 57: a temporary locked condition of the accessory with respect to the box-like body 3 is thus achieved.

Adapted means also cooperate to constitute the third means for stable interconnection to the accessories 2, protrude transversely to the terminal end of the stems 54 of each one of the wedges 53 that is opposite with respect to the one provided with the lugs 55, and are constituted by a series of fins 61a, 61b which have a C-shaped or H-shaped cross-section and have such dimensions as to rest, as shown in Figure 6, on the terminal end of a corresponding and adjacent third tooth 52, which is forced to be accommodated in the corresponding opening 57.

In order to achieve release, there is a screw 58, which passes through the stem 54 of the wedge 53, the head 59 of which is external to the wedge 53, and which interacts with a release nut 62; the activation of the screw 58 forces the partial extraction of the wedge 53 from the block 47 and therefore the lugs 55 of each wedge 53 force, by virtue of the interaction along inclined planes, the mutual approach of the sixth wings 50a, 50b and the third teeth 52 of the block 47 disengage from the openings 57, allowing the extraction of the accessory 2 from the box-like body 3.

It has thus been found that the invention has achieved the intended aim and objects, an invention having been devised which allows to interconnect stably accessories such as, by way of non-limiting example, fenders, side guards, tool carrying boxes, hand washing water tanks, to a trailer truck or an articulated rig with rapidity, precision and repeatability of the interconnection, having at the same time high adaptability to the dimensional variables that can be detected in the accessories most commonly used in trailer structures of various kinds.

The invention furthermore allows, after its interconnection to a trailer truck or articulated rig of an accessory, the quick and easy removal of said accessory, the absence of metallic parts increasing reliability.

The invention is of course susceptible of numerous modifications and variations, all of which are within the scope of the appended claims.

The materials used, as well as the dimensions that constitute the individual components of the invention, may of course be more pertinent according to the specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for the temporary interconnection of accessories (2) to a truck or an articulated rig composed of tractor and trailer or semi trailer, comprising a box-like body or support (3) provided in an upward region with first means for anchoring and locking to a bracket (100) which constitutes the chassis of said truck or articulated rig composed of tractor and trailer or semi trailer, **characterized in that** said box-like body or support (3) is provided laterally and frontally with first means for temporary interconnection to complementarily shaped second engagement means which are provided in said accessories (2) and frontally with third means for temporary or stable interconnection to said accessories (2).

2. The device (1) according to claim 1, **characterized in that** on the lateral surfaces (35a, 35b) and on the front surface (36) of said box-like body or support (3) there are said first means for temporary interconnection, which comprise a pair of first protrusions (37a, 37b) and a pair of second protrusions (37c, 37d), which are substantially mutually parallel and between which a first axial seat (38) is formed which is provided at right angles to a rail (4) that is present on the planar upper surface (5) of said box-like body or support (3), said first seat (38) being slightly axially offset with respect to the axis of said rail (4).

3. The device (1) according to claim 2, **characterized in that** each one of said pair of first protrusions (37a, 37b) and second protrusions (37c, 37d) is comb-shaped, so as to form individual second teeth (101), each element of said pair of first protrusions (37a, 37b) being L-shaped with a fifth free wing (39a, 39b) which is directed toward said front surface (36), said first protrusions (37a, 37b) and said second protrusions (37c, 37d) cooperating with complementarily shaped second engagement means provided in said accessories (2), which are constituted by a pair of slots (40a, 40b) and by a pair of protrusions (41a, 41b).

4. The device (1) according to one or more of the preceding claims, **characterized in that** said pair of slots (40a, 40b) is provided proximate to or at the rear lateral edges (42a, 42b) of the rear wall (43) of said accessory (2) and affects part of the height of said rear lateral edges (42a, 42b) for part of the depth of said rear wall (43), said pair of protrusions (41a, 41b) protruding to the rear of the lateral edges (44a, 44b) of the front wall (45) of said accessory (2) and affecting part of the height of said lateral edges (44a, 44b) and being extended for part of the depth of said front wall (45), the width of said rear wall (43) being narrower than that of said front wall (45).

5. The device (1) according to one or more of the preceding claims, **characterized in that** said pair of slots (40a, 40b) and said pair of protrusions (41a, 41b) each have an axial seat (46) for the access and placement of said complementarily shaped pairs of first protrusions (37a, 37b) and second protrusions (37c, 37d), said axial seats (46) being arranged vertically with respect to said accessory (2), so as to allow a chosen height placement thereof with respect to said chassis of the truck or articulated rig composed of tractor and trailer or semi trailer, said first protrusions (37a) having dimensions which are different from those of said second protrusions (37b), the former protruding more externally from the lateral surface (35a), the axial offset of said first axial seat (38) in the direction of said first protrusions (37a) and the extent of said axial offset being such as to compensate the greater projection of said first protrusions (37a) from said lateral surface (35a).

6. The device (1) according to one or more of the preceding claims, **characterized in that** frontally to said box-like body (3) there are third means for temporary or stable interconnection to said accessories (2), said third means comprising a block (47) which is substantially U-shaped so as to form a base (48), which is substantially equal in height to said box-like body (3), is T-shaped and is provided with a pair of sixth wings (48a, 48b) which can be inserted within a complementarily shaped second cavity (49) provided at one end of said first seat (38) that is directed in the opposite direction with respect to said front surface (36), said block (47) thus not being allowed to perform an axial movement with respect to said box-like body (3).

7. The device (1) according to one or more of the preceding claims, **characterized in that** multiple sixth wings (50a, 50b) protrude from said base (48), are elastically deformable and, at rest, tend to be arranged substantially mutually parallel, once said block (47) has been arranged within said first seat (38) said sixth wings (50a, 50b) arranging themselves laterally adjacent to corresponding recesses (51a, 51b) provided on the mutually facing surfaces of each one of said teeth (101) of said pair of second protrusions (37c, 37d), each one of said elastically deformable sixth wings (50a, 50b) having, at the free end directed toward said front surface (36), third teeth (52) which have a triangular shape with the vertex directed toward said front surface (36).

8. The device (1) according to one or more of the preceding claims, **characterized in that** a T-shaped wedge (53) contributes to constitute said third means for temporary or stable interconnection to said accessories (2), its stem (54) being insertable between said sixth wings (50a, 50b), multiple lugs (55) protruding outward, proximate to its free end, laterally to said stem (54).

9. The device (1) according to one or more of the preceding claims, **characterized in that** grooves (60), provided axially to each one of said sixth wings (50a, 50b), contribute to constitute said third means for temporary or stable interconnection to said accessories (2), said lugs (55) being arranged within said grooves (60) during the step of release of said accessory (2), the presence and shape of said recesses (51a, 51b) being such as to allow insertion thereat of the outer lateral edge (56a, 56b) of said pair of protrusions (41a, 41b) in the portion in which said axial seats (46) are provided, on the lateral surfaces of said outer lateral edges (56a, 56b) that act on said recesses (51a, 51b) there being openings (57) adapted to accommodate temporarily said third teeth (52).

10. The device (1) according to one or more of the preceding claims, **characterized in that** when it is necessary to couple one of said accessories (2) between two of said box-like bodies (3) designated by the numerals (3a, 3b), said first protrusion (37a) of said box-like body (3a) must be inserted in a chosen one of said axial seats (46) of said first slot (40a) and said second protrusion (37c), again of said box-like body (3a), must be inserted in a chosen one of said axial seats (46) of said second slot (41a).

11. The device (1) according to one or more of the preceding claims, **characterized in that** when it is necessary to couple one of said accessories (2) between two of said box-like bodies (3), designated by the numerals (3a, 3b), said first protrusion (37b) of said box-like body (3b) must be inserted in a corresponding one of said axial seats (46) of said first slot (40b) and said second protrusion (37d), again of said box-like body (3b), must be inserted in one of said axial seats (46) of said second slot (41b).

12. The device (1) according to one or more of the preceding claims, **characterized in that** after arranging said block (47) and said wedge (53) in said seat (38) and said pair of second protrusions (37c, 37d) in said axial seats (46), forcing said wedges (53) within said blocks (47), said sixth wings (50a, 50b) are divaricated so that said third teeth (52) are arranged in said openings (57), reaching a condition of temporary locking of said accessory (2) to said box-like body (3).

13. The device (1) according to one or more of the preceding claims, **characterized in that** means cooperate to constitute said third means for stable interconnection to said accessories (2) and protrude transversely at the terminal end of said stem (54) of each one of said wedges (53) that lies opposite the one provided with said lugs (55), which are constituted by a series of fins (61a, 61b) which have a C-shaped or H-shaped cross-section, with such dimensions as to rest on the terminal end of a corresponding and adjacent third tooth (52) which is forced to be accommodated in the corresponding opening (57).

14. The device (1) according to one or more of the preceding claims, **characterized in that** in order to achieve the release of said accessory (2) there is a screw (58), which passes through said stem (54) of said wedge (53) and the head (59) of which is external to said wedge (53), said screw (58) interacting with a release nut (62), the activation of said screw (58) forcing the partial extraction of said wedge (53) from said block (47), said lugs (55) of each one of said wedges (53) forcing, by virtue of the interaction on inclined planes, the mutual approach of said sixth wings (50a, 50b), said third teeth (52) of said block (47) disengaging from said openings (57), allowing the extraction of said accessory (2) from said box-like body (3).

## Patentansprüche

1. Eine Vorrichtung (1) zum zeitweiligen Verbinden von Zubehörteilen (2) mit einem Lastkraftwagen oder einem aus Zugfahrzeug und Anhänger oder Auflieger bestehenden Gelenkbock, die einen schachtelähnlichen Körper oder Träger (3) umfasst, der in einem oberen Bereich mit ersten Mitteln zur Verankerung und Befestigung an einem Arm (100) ausgestattet ist, welcher das Fahrgestell des Lastkraftwagens oder Gelenkbocks bildet, der aus Zugfahrzeug und Anhänger oder Auflieger besteht; **dadurch gekennzeichnet, dass** der schachtelähnliche Körper oder Träger (3) an den Seiten und vorne mit ersten Mitteln zum vorübergehenden Verbinden mit komplementär geformten zweiten Eingriffsmitteln ausgestattet ist, die in den Zubehörteilen (2) angebracht sind, und an der Vorderseite mit dritten Mitteln für die vorübergehende oder feste Verbindung mit den Zubehörteilen (2).

2. Die Vorrichtung (1) gemäß Anspruch 1, **dadurch gekennzeichnet, dass** an den Seitenflächen (35a, 35b) und an der Vorderseite (36) des schachtelähnlichen Körpers oder Trägers (3) erste Mittel zum vorübergehenden Verbinden angebracht sind, die ein Paar erster Vorsprünge (37a, 37b) und ein Paar zweiter Vorsprünge (37c, 37d) umfassen, welche im Wesentlichen zueinander parallel sind und zwischen welchen ein erster axialer Sitz (38) geformt ist, der in rechten Winkeln zu einer Schiene (4) angebracht ist, die sich auf der planaren oberen Oberfläche (5) des schachtelähnlichen Körpers oder Trägers (3) befindet, wobei der erste Sitz (38) axial leicht von der Achse der Schiene (4) versetzt ist.

3. Die Vorrichtung (1) gemäß Anspruch 2, **dadurch gekennzeichnet, dass** sowohl das Paar erster Vorsprünge (37a, 37b) als auch dasjenige zweiter Vorsprünge (37c, 37d) kammförmig sind, um individuelle zweite Zähne (101) zu bilden; wobei jedes Element des Paares erster Vorsprünge (37a, 37b) L-förmig mit einem fünften freien Flügel (39a, 39b) ist, der der Vorderseite (36) zugewandt ist; wobei die ersten Vorsprünge (37a, 37b) und die zweiten Vorsprünge (37c, 37d) mit komplementär geformten zweiten Eingriffsmitteln zusammenwirken, die in den Zubehörteilen (2) angebracht sind und aus einem Paar von Schlitzen (40a, 40b) und einem Paar von Vorsprüngen (41a, 41b) bestehen.

4. Die Vorrichtung (1) gemäß einem oder mehreren der obigen Ansprüche, **dadurch gekennzeichnet, dass** das Paar von Schlitzen (40a, 40b) in der Nähe oder an den hinteren Seitenkanten (42a, 42b) der Rückwand (43) des Zubehörteils (2) angebracht ist und einen Teil der Höhe der hinteren Seitenkanten (42a, 42b) für einen Teil der Tiefe der Rückwand (43) beeinflusst, wobei das Paar von Vorsprüngen (41a, 41b) zur Rückseite der Seitenkanten (44a, 44b) der Vorderwand (45) des Zubehörteils (2) vorsteht, einen Teil der Höhe der Seitenkanten (44a, 44b) beeinflusst und sich über einen Teil der Tiefe der Vorderwand (45) erstreckt, wobei die Rückwand (43) schmaler ist als die Vorderwand (45).

5. Die Vorrichtung (1) gemäß einem oder mehreren der obigen Ansprüche, **dadurch gekennzeichnet, dass** das Paar von Schlitzen (40a, 40b) und das Paar von Vorsprüngen (41a, 41b) jeweils einen axialen Sitz (46) für den Zugang und die Positionierung der komplementär geformten Paare erster Vorsprünge (37a, 37b) und zweiter Vorsprünge (37c, 37d) haben, wobei die axialen Sitze (46) vertikal mit Bezug auf das Zubehörteil (2) angeordnet sind, um eine Positionierung derselben in gewünschter Höhe mit Bezug auf das Fahrgestell des Lastkraftwagens oder Gelenkbocks zu ermöglichen, der aus Zugfahrzeug und Anhänger oder Auflieger besteht; wobei die ersten Vorsprünge (37a) andere Abmessungen haben als die zweiten Vorsprünge (37b), wobei Erstere weiter von der Seitenfläche (35a) nach außen vorstehen; wobei der axiale Versatz des ersten axialen Sitzes (38) in Richtung der ersten Vorsprünge (37a) und das Ausmaß des axialen Versatzes geeignet sind, das weitere Vorstehen der ersten Vorsprünge (37a) von der Seitenfläche (35a) zu kompensieren.

6. Die Vorrichtung (1) gemäß einem oder mehreren der obigen Ansprüche, **dadurch gekennzeichnet, dass** sich frontal an dem schachtelähnlichen Körper (3) dritte Mittel für die vorübergehende oder feste Verbindung mit den Zubehörteilen (2) befinden, wobei die dritten Mittel einen Block (47) umfassen, der im Wesentlichen U-förmig ist, um eine Basis (48) zu bilden, die in ihrer Höhe im Wesentlichen gleich dem schachtelähnlichen Körper (3) ist, T-förmig und mit einem Paar sechster Flügel (48a, 48b) ausgestattet ist, die in einen komplementär geformten zweiten Hohlraum (49) eingeführt werden können, welcher an einem Ende des ersten Sitzes (38) angebracht ist, welches in die Richtung weist, die der Vorderseite (36) entgegengesetzt ist, wodurch der Block (47) keine axiale Bewegung mit Bezug auf den schachtelähnlichen Körper (3) durchführen kann.

7. Die Vorrichtung (1) gemäß einem oder mehreren der obigen Ansprüche, **dadurch gekennzeichnet, dass** mehrere sechste Flügel (50a, 50b) von der Basis (48) vorstehen, elastisch verformbar sind und im Ruhezustand dazu neigen, im Wesentlichen parallel zueinander angeordnet zu werden; wobei die sechsten Flügel (50a, 50b) sich, sobald der Block (47) in dem ersten Sitz (38) angeordnet wurde, seitlich angrenzend an entsprechende Aussparungen (51a, 51b) anordnen, die an den einander zugewandten Oberflächen jedes der Zähne (101) des Paares zweiter Vorsprünge (37c, 37d) angebracht sind; wobei jeder der elastisch verformbaren sechsten Flügel (50a, 50b) an dem freien Ende, das der Vorderseite (36) zugewandt ist, dritte Zähne (52) hat, die eine Dreieckform haben, wobei der Scheitelpunkt der Vorderseite (36) zugewandt ist.

8. Die Vorrichtung (1) gemäß einem oder mehreren der obigen Ansprüche, **dadurch gekennzeichnet, dass** ein T-förmiger Keil (53) zur Bildung der dritten Mittel für die vorübergehende oder feste Verbindung mit den Zubehörteilen (2) beiträgt, wobei sein Schaft (54) zwischen die sechsten Flügel (50a, 50b) einführbar ist, wobei angrenzend an sein freies Ende, seitlich von dem Schaft (54), mehrere Nasen (55) nach außen ragen.

9. Die Vorrichtung (1) gemäß einem oder mehreren der obigen Ansprüche, **dadurch gekennzeichnet, dass** Nuten (60), die axial zu jedem der sechsten Flügel (50a, 50b) angebracht sind, zur Bildung der dritten Mittel für die vorübergehende oder feste Verbindung mit den Zubehörteilen (2) beitragen; wobei die Nasen (55) sich während des Schritts des Lösens des Zubehörteils (2) innerhalb der Nuten (60) befinden; wobei die Anwesenheit und Form der Aussparungen (51a, 51b) geeignet ist, das Einführen der äußeren Seitenkante (56a, 56b) des Paares von Vorsprüngen (41a, 41b) in dem Abschnitt, in dem die axialen Sitze (46) angebracht sind, in dieselben zu ermöglichen; wobei sich an den Seitenflächen der äußeren Seitenkanten (56a, 56b), die auf die Aussparungen (51a, 51b) einwirken, Öffnungen (57) befinden, die geeignet sind, die dritten Zähne (52) vorübergehend aufzunehmen.

10. Die Vorrichtung (1) gemäß einem oder mehreren der obigen Ansprüche, **dadurch gekennzeichnet, dass**, wenn es notwendig ist, eins der Zubehörteile (2) zwischen zwei der schachtelähnlichen Körper (3) zu koppeln, die mit den Bezugszeichen (3a, 3b) gekennzeichnet sind, der erste Vorsprung (37a) des schachtelähnlichen Körpers (3a) in einen ausgewählten Sitz der axialen Sitze (46) des ersten Schlitzes (40a) eingeführt werden muss und der zweite Vorsprung (37c) des schachtelähnlichen Körpers (3a) in einen ausgewählten Sitz der axialen Sitze (46) des zweiten Schlitzes (41a) eingeführt werden muss.

11. Die Vorrichtung (1) gemäß einem oder mehreren der obigen Ansprüche, **dadurch gekennzeichnet, dass**, wenn es notwendig ist, eins der Zubehörteile (2) zwischen zwei der schachtelähnlichen Körper (3) zu koppeln, die mit den Bezugszeichen (3a, 3b) gekennzeichnet sind, der erste Vorsprung (37b) des schachtelähnlichen Körpers (3b) in einen entsprechenden der axialen Sitze (46) des ersten Schlitzes (40b) eingeführt werden muss und der zweite Vorsprung (37d) des schachtelähnlichen Körpers (3b) in einen der axialen Sitze (46) des zweiten Schlitzes (41b) eingeführt werden muss.

12. Die Vorrichtung (1) gemäß einem oder mehreren der obigen Ansprüche, **dadurch gekennzeichnet, dass** nach dem Anordnen des Blocks (47) und des Keils (53) in dem Sitz (38) und des Paares zweiter Vorsprünge (37c, 37d) in den axialen Sitzen (46), wobei die Keile (53) in die Blöcke (47) gedrückt werden, die sechsten Flügel (50a, 50b) auseinandergedrückt werden, so dass die dritten Zähne (52) in die Öffnungen (57) eingeführt werden und so ein Zustand vorübergehender Befestigung des Zubehörteils (2) an dem schachtelähnlichen Körper (3) erreicht wird.

13. Die Vorrichtung (1) gemäß einem oder mehreren der obigen Ansprüche, **dadurch gekennzeichnet, dass** Mittel zusammenwirken, um die dritten Mittel für die feste Verbindung mit den Zubehörteilen (2) zu bilden, und am terminalen Ende des Schafts (54) jedes der Keile (53) quer vorstehen, das demjenigen gegenüberliegt, welches mit den Nasen (55) ausgestattet ist, und aus einer Reihe von Flügeln (61a, 61b) mit C-förmigem oder H-förmigem Querschnitt bestehen, mit Abmessungen, die geeignet sind, am terminalen Ende eines entsprechenden benachbarten dritten Zahns (52) anzuliegen, der in die entsprechende Öffnung (57) hineingedrückt wird.

14. Die Vorrichtung (1) gemäß einem oder mehreren der obigen Ansprüche, **dadurch gekennzeichnet, dass** zum Lösen des Zubehörteils (2) eine Schraube (58) vorhanden ist, die den Schaft (54) des Keils (53) durchdringt und deren Kopf (59) außerhalb des Keils (53) liegt, wobei die Schraube (58) mit einer Verschlussmutter (62) zusammenwirkt; wobei die Betätigung der Schraube (58) die Teilextraktion des Keils (53) aus dem Block (47) bewirkt; wobei die Nasen (55) jedes der Keile (53) durch das Zusammenwirken auf schrägen Ebenen die gegenseitige Annäherung der sechsten Flügel (50a, 50b) erzwingen; wobei die dritten Zähne (52) des Blocks (47) sich aus den Öffnungen (57) lösen und so die Extraktion des Zubehörteils (2) aus dem schachtelähnlichen Körper (3) ermöglichen.

## Revendications

1. Dispositif (1) pour l'interconnexion temporaire d'accessoires (2) à un camion ou une plate-forme articulée composée d'un tracteur et d'une remorque ou d'une semi-remorque, comportant un corps ou support analogue à un boîtier (3) pourvu, dans une zone vers le haut, de premiers moyens d'ancrage et de blocage à un support (100) qui constitue le châssis dudit camion ou de ladite plate-forme articulée composée d'un tracteur et d'une remorque ou d'une semi-remorque, **caractérisé en ce que** ledit corps ou support analogue à un boîtier (3) est latéralement et frontalement pourvu de premiers moyens d'interconnexion temporaire à des deuxièmes moyens de prise formés de manière complémentaire qui sont pourvus, dans lesdits accessoires (2) et frontalement, de troisièmes moyens d'interconnexion temporaire ou stable auxdits accessoires (2).

2. Dispositif (1) selon la revendication 1, **caractérisé en ce que** sur les surfaces latérales (35a, 35b) et sur la surface avant (36) dudit corps ou support analogue à un boîtier (3) sont agencés lesdits premiers moyens d'interconnexion temporaire, qui comportent une paire de premières saillies (37a, 37b) et une paire de secondes saillies (37c, 37d), qui sont sensiblement mutuellement parallèles et entre lesquelles un premier logement axial (38) est formé qui est agencé à angles droits par rapport à un rail (4) qui est présent sur la surface plane supérieure (5) dudit corps ou support analogue à un boîtier (3), ledit premier logement (38) étant légèrement décalé axialement par rapport à l'axe dudit rail (4).

3. Dispositif (1) selon la revendication 2, **caractérisé en ce que** chaque saillie de ladite paire de premières saillies (37a, 37b) et de secondes saillies (37c, 37d) est en forme de peigne, de manière à former des deuxièmes dents individuelles (101), chaque élément de ladite paire de premières saillies (37a, 37b) étant en forme de L avec une cinquième aile libre (39a, 39b) qui est dirigée vers ladite surface avant (36), lesdites premières saillies (37a, 37b) et lesdites secondes saillies (37c, 37d) coopérant avec des deuxièmes moyens de prise formés de manière complémentaire agencés dans lesdits accessoires (2), qui sont constitués d'une paire de fentes (40a, 40b) et d'une paire de saillies (41a, 41b).

4. Dispositif (1) selon une ou plusieurs des revendications précédentes, **caractérisé en ce que** ladite paire de fentes (40a, 40b) est agencée près des bords latéraux arrière (42a, 42b) de la paroi arrière (43) dudit accessoire (2) ou sur ceux-ci et affecte une partie de la hauteur desdits bords latéraux arrière (42a, 42b) sur une partie de la profondeur de ladite paroi arrière (43), ladite paire de saillies (41a, 41b) faisant saillie vers l'arrière des bords latéraux (44a, 44b) de la paroi avant (45) dudit accessoire (2) et affectant une partie de la hauteur desdits bords latéraux (44a, 44b) et s'étendant sur une partie de la profondeur de ladite paroi avant (45), la largeur de ladite paroi arrière (43) étant plus étroite que celle de ladite paroi avant (45).

5. Dispositif (1) selon une ou plusieurs des revendications précédentes, **caractérisé en ce que** ladite paire de fentes (40a, 40b) et ladite paire de saillies (41a, 41b) ont chacune un logement axial (46) pour l'accès et le placement desdites paires de premières saillies (37a, 37b) et de secondes saillies (37c, 37d) formées de manière complémentaire, lesdits logements axiaux (46) étant agencés verticalement par rapport audit accessoire (2), de manière à permettre un placement à hauteur choisie de ceux-ci par rapport audit châssis du camion ou de la plate-forme articulée composée d'un tracteur et d'une remorque ou d'une semi-remorque, lesdites premières saillies (37a) ayant des dimensions qui sont différentes de celles desdites secondes saillies (37b), les premières faisant saillie plus extérieurement à partir de la surface latérale (35a), le décalage axial dudit premier logement axial (38) dans la direction desdites premières saillies (37a) et l'étendue dudit décalage axial étant telles qu'ils compensent la plus grande saillie desdites premières saillies (37a) à partir de ladite surface latérale (35a).

6. Dispositif (1) selon une ou plusieurs des revendications précédentes, **caractérisé en ce que** frontalement audit corps analogue à un boîtier (3) sont agencés des troisièmes moyens d'interconnexion temporaire ou stable auxdits accessoires (2),lesdits troisièmes moyens comportant un bloc (47) qui est sensiblement en forme de U de manière à former une base (48), qui est sensiblement égale en hauteur audit corps analogue à un boîtier (3), est en forme de T et est pourvue d'une paire de sixièmes ailes (48a, 48b) qui peuvent être insérées à l'intérieur d'une seconde cavité (49) formée de manière complémentaire agencée à une extrémité dudit premier logement (38) qui est dirigé dans la direction opposée par rapport à ladite surface avant (36), ledit bloc (47) ne pouvant ainsi pas réaliser un mouvement axial par rapport audit corps analogue à un boîtier (3).

7. Dispositif (1) selon une ou plusieurs des revendications précédentes, **caractérisé en ce que** des sixièmes ailes multiples (50a, 50b) font saillie à partir de ladite base (48), sont élastiquement déformables et, au repos, tendent à être agencées de manière sensiblement mutuellement parallèle, une fois que ledit bloc (47) a été agencé à l'intérieur dudit premier logement (38), lesdites sixièmes ailes (50a, 50b) s'agençant elles-mêmes latéralement au voisinage d'évidements (51a, 51b) correspondants agencés sur les surfaces mutuellement opposées de chacune desdites dents (101) de ladite paire de secondes saillies (37c, 37d), chacune desdites sixièmes ailes élastiquement déformables (50a, 50b) ayant, sur l'extrémité libre dirigée vers ladite surface avant (36), des troisièmes dents (52) qui ont une forme triangulaire avec le sommet dirigé vers ladite surface avant (36).

8. Dispositif (1) selon une ou plusieurs des revendications précédentes, **caractérisé en ce qu'**un coin en forme de T (53) contribue à constituer lesdits troisièmes moyens d'interconnexion temporaire ou stable auxdits accessoires (2), sa tige (54) pouvant être insérée entre lesdites sixièmes ailes (50a, 50b), des pattes multiples (55) faisant saillie vers l'extérieur, près de son extrémité libre, latéralement à ladite tige (54).

9. Dispositif (1) selon une ou plusieurs des revendications précédentes, **caractérisé en ce que** des rainures (60), agencées axialement sur chacune desdites sixièmes ailes (50a, 50b), contribuent à constituer lesdits troisièmes moyens d'interconnexion temporaire ou stable auxdits accessoires (2), lesdites pattes (55) étant agencées à l'intérieur desdites rainures (60) pendant l'étape de libération dudit accessoire (2), la présence et la forme desdits évidements (51a, 51b) étant telles qu'elles permettent une insertion sur ceux-ci du bord latéral extérieur (56a, 56b) de ladite paire de saillies (41a, 41b) dans la partie dans laquelle lesdits logements axiaux (46) sont agencés, sur les surfaces latérales desdits bords latéraux extérieurs (56a, 56b) qui agissent sur lesdits évidements (51a, 51b), étant agencées des ouvertures (57) adaptées pour recevoir temporairement lesdites troisièmes dents (52).

10. Dispositif (1) selon une ou plusieurs des revendications précédentes, **caractérisé en ce que** lorsqu'il est nécessaire d'accoupler l'un desdits accessoires (2) entre deux desdits corps analogues à un boîtier (3) désignés par les références numériques (3a, 3b), ladite première saille (37a) dudit corps analogue à un boîtier (3a) doit être insérée dans un logement choisi parmi lesdits logements axiaux (46) de ladite première fente (40a) et ladite seconde saillie (37c), à nouveau dudit corps analogue à un boîtier (3a), doit être insérée dans un logement choisi parmi lesdits logements axiaux (46) de ladite seconde fente (41a).

11. Dispositif (1) selon une ou plusieurs des revendications précédentes, **caractérisé en ce que** lorsqu'il est nécessaire d'accoupler l'un desdits accessoires (2) entre deux desdits corps analogues à un boîtier (3), désignés par les références numériques (3a, 3b), ladite première saillie (37b) dudit corps analogue à un boîtier (3b) doit être insérée dans un logement correspondant parmi lesdits logements axiaux (46) de ladite première fente (40b) et ladite seconde saillie (37b), à nouveau dudit corps analogue à un boîtier (3b), doit être insérée dans l'un desdits logements axiaux (46) de ladite seconde fente (41b).

12. Dispositif (1) selon une ou plusieurs des revendications précédentes, **caractérisé en ce qu'**après l'agencement dudit bloc (47) et dudit coin (53) dans ledit logement (38) et de ladite paire de secondes saillies (37c, 37d) dans lesdits logements axiaux (46), en forçant lesdits coins (53) à l'intérieur desdits blocs (47), lesdites sixièmes ailes (50a, 50b) sont écartées de sorte que lesdites troisièmes dents (52) sont agencées dans lesdites ouvertures (57), en atteignant un état de blocage temporaire dudit accessoire (2) sur ledit corps analogue à un boîtier (3).

13. Dispositif (1) selon une ou plusieurs des revendications précédentes, **caractérisé en ce que** des moyens coopèrent pour constituer lesdits troisièmes moyens d'interconnexion stable auxdits accessoires (2) et font transversalement saillie sur l'extrémité terminale de ladite tige (54) de chacun desdits coins (53) qui se situe à l'opposé de celle pourvue desdites pattes (55), qui sont constitués d'une série d'ailettes (61a, 61b) qui ont une section transversale en forme de C ou en forme de H, avec des dimensions telles qu'elles viennent en appui sur l'extrémité terminale d'une troisième dent (52) correspondante et adjacente qui est forcée à être reçue dans l'ouverture (57) correspondante**.**

14. Dispositif (1) selon une ou plusieurs des revendications précédentes, **caractérisé en ce que**, afin d'obtenir la libération dudit accessoire (2), est agencée une vis (58), qui passe à travers ladite tige (54) dudit coin (53) et dont la tête (59) est extérieure audit coin (53), ladite vis (58) interagissant avec un écrou de libération (62), l'activation de ladite vis (58) forçant l'extraction partielle dudit coin (53) dudit bloc (47), lesdites pattes (55) de chacun desdits coins (53) forçant, du fait de l'interaction sur des plans inclinés, l'approche mutuelle desdites sixièmes ailes (50a, 50b), lesdites troisièmes dents (52) dudit bloc (47) se désengageant desdites ouvertures (57), en permettant l'extraction dudit accessoire (2) dudit corps analogue à un boîtier (3).
